# EUROPEAN PATENT APPLICATION

(11) **EP 2 213 632 A1**
(43) Date of publication of application: **04.08.2010**
(21) Application number: 08844121.7
(22) Date of filing: 20.10.2008
(51) Int. Cl.: C03B 33/027, B28D 5/00, C03B 33/037

(54) **DEVICE FOR SCORING GLASS SHEET**

(30) Priority: 31.10.2007 JP 2007282879
(71) Applicant: Central Glass Company, Limited, Yamaguchi 755-0001 (JP); Nikken Dia Co., Ltd., Osaka 547-0035 (JP)
(72) Inventor: ARAI, Hiroto,, Osaka-shi Osaka 547-0035 (JP); TANISE, Nobuhisa, Okuchicho, Matsusaka-shi Mie 515-0001 (JP)
(74) Representative: Grünecker, Kinkeldey, Stockmair & Schwanhäusser Anwaltssozietät
(86) International application number: PCT/JP2008/068967
(87) International publication number: WO 2009/057474

(57) **Abstract**

An apparatus for providing a cutting line on a glass sheet, in which the cutting line for bend-cutting the glass sheet is provided on the glass sheet conveyed on a carrying roller, is provided with: a cutter configured to provide the cutting line on the glass sheet; a ball slide device configured to freely move the cutter up and down in accordance with an up-down movement of the conveyed glass sheet, and to absorb an excessive pressing force of the cutter onto a glass sheet surface so as to keep the pressing force constant; a spring configured to apply an appropriate cutter pressure to the glass sheet surface; an arm configured to support the ball slide device, the spring, and the cutter; and a pressing device configured to press the arm toward the glass sheet surface.

## Description

### Technical Field:

The present invention relates to an apparatus for providing a cutting line on a glass sheet which provides a uniform cutting line for cutting a broad glass ribbon formed and conveyed by a float method, particularly a thin glass sheet having a thickness of 2 mm or less, with a predetermined dimension, without damaging the glass sheet.

### Background Art:

A glass ribbon formed by a float method is conveyed on a conveying roll in an annealing step and an inspection step, cutting lines in required size positions in longitudinal and lateral directions are provided thereon, and then the glass ribbon is cut by bend-cutting, whereby glass sheets of the required size are obtained. However, the glass ribbon is frequently conveyed in a meandering state in a width direction, or in an up-down undulant state which is so-called wave state due to various factors received during a conveyance.

Recently, a thin sheet glass of 2 mm or less in thickness is required as a glass sheet for display. In particular, since the glass ribbon formed into a glass sheet of 0.4 to 1.1 mm in thickness by the float method is very thin, the great wave-shaped undulation in the up-down direction is produced in the glass ribbon conveyed through the annealing step. Further, compared with a center portion of the glass ribbon used as a product, vicinities of the both end portions in the width direction thereof have the large sheet-thickness out of a standard range.

In case that it is attempted to provide a cutting line in order to cut, in predetermined size, such the thin glass ribbon of which the product portion is 0.4 to 1.1 mm in thickness, a wheel chip of a cutter is forced on a glass sheet surface too much due to the up-down wave. Even in case that the wheel chip of the cutter is forced on the glass sheet surface too much, as long as the glass sheet has a thickness of 2 mm or more, the glass sheet is not broken. However, the thin glass ribbon of which the product portion is 0.4 to 1.1 mm in thickness can be damaged even by a small increase in pressure.

Regarding provision of the cutting line on a glass substrate for display, many glass cutting devices which can provide a cutting line with uniform force have been proposed.

For example, in JP-A-2002-321933 (Patent Document 1), a cutting line providing apparatus for sheet glass which is used for providing a cutting line on the upper surface of a sheet glass placed horizontally has been disclosed. The apparatus includes a main frame that is movable in a cutting line providing direction, a sub-frame that is provided for the main frame slidably in the up-down direction, a cutter frame that is provided on the sub-frame and holds a cutter for cutting the sheet glass, a posture changing mechanism that changes a posture of the cutter frame between an abutment posture where the cutter abuts on the sheet glass and a press posture where the cutter is pressed against the sheet glass at a fixed pressure, and an elastic member interposed between the posture changing mechanism and the cutter frame.

Further, in JP-A-2002-274875 (Patent Document 2), a glass sheet cutting head has been disclosed. The apparatus includes a cutting line providing means for providing a cutting line on a glass sheet, and an up-down moving means that moves the cutting line providing means up and down. The up-down moving means includes a mover, a stator, and an electric linear motor that generates up-down power for moving up and down the cutting line providing means.

Furthermore, in JP-A-2002-316829 (Patent Document 3), a glass substrate cutting method has been disclosed. In the method, when directions orthogonal to one another are taken as an X-direction, a Y-direction and a Z-direction, a cutter movably supported in the Z-direction in relation to a head is relatively moved in the X-direction while being abutted on a glass substrate arranged on an X-Y plane, thereby to provide a scribe groove extending in the X-direction along a predeterminate cutting line, and thereafter the glass sheet is cut along the predeterminate cutting line. The method is **characterized in that** at least one of scribe groove providing conditions which are a relative position in the Z-direction of the head in relation to the glass substrate and a pressing power in the Z-direction in relation to the cutter by the head is changed during providing the scribe groove.
Patent Document 1: JP-A-2002-321933
Patent Document 2: JP-A-2002-274875
Patent Document 3: JP-A-2002-316829

In the device described in the Patent Document 1, a sub-frame 14 moved up and down by a main cylinder 24 can be slid along a rail 25 of a main frame 13. The sub-frame 14 does not move freely up and down in response to unevenness of the surface of the glass sheet, but it is fixed after being set once. Further, a swing arm 31 moves up and down so as to draw an arc around a swing center axis 33 due to the unevenness of the surface of the glass sheet. Namely, the swing arm 31 is not a mechanism which can smoothly slide in a just upper direction by means of a ball bearing or the like. Therefore, the device described in the Patent Document 1 cannot necessarily follow smoothly the wave of the glass sheet. In case that a cutting line is provided on a super thin sheet glass such as a sheet glass having a thickness of 0.4 to 1.1 mm, there is fear that the super-thin sheet glass may break.

Further, in the apparatus described in the Patent Document 2, the electric linear motor moves down the cutting line providing means to the desired position in relation to the glass sheet which gets still on a table off-line and has a little wave in the product thickness range, and a cutting line is provided on the glass sheet by an air cylinder provided for the cutting line providing means. Although the apparatus described in the Patent Document 2 can set slightly the distance between which a cutting edge is moved up and down, when it scribes the waving glass ribbon conveyed on-line, it cannot follow the glass ribbon smoothly. Therefore, in the apparatus described in the Patent Document 2, similarly to the case in the apparatus described in the Patent Document 1, in case that a cutting line is provided on a super thin sheet glass such as a sheet glass having a thickness of 0.4 to 1.1 mm, the device cannot respond to the wave and the cutting edge is forced on the glass sheet too much, so that there is fear that the glass sheet may break.

Further, in the method described in the Patent Document 3, in relation to the glass sheet which gets still on a table off-line and has little wave in the product thickness range, a scribing head is moved up and down to the desired height by a ball screw of a Z-direction driving mechanism, and further the position of the scribing head onto the glass sheet surface can be changed by an air actuator that is a pressing mechanism, whereby the forcing pressure of the cutter head onto the glass sheet surface can be adjusted. However, in case that this method is applied to a thin sheet glass conveyed on a carrying roller, similarly to the case in the apparatuses described in the Patent Documents 1 and 2, in case that a cutting line is provided on a super thin sheet glass such as a sheet glass having a thickness of 0.4 to 1.1 mm, there is fear that the glass sheet may break while the pressure in the cylinder is being adjusted.

### Summary of Invention:

One or more embodiments of the invention provides an apparatus for providing a cutting line on a thin glass sheet, in which a cutter is forced at a fixed pressure even on a glass ribbon conveyed on-line of which a central product thickness portion has a thickness of 2 mm or less, and particularly a thickness of 0.4 to 1.1 mm, thereby to prevent the glass sheet from damaging.

According to one or more embodiment of the invention, an apparatus for providing a cutting line on a glass sheet, in which the cutting line for bend-cutting the glass sheet is provided on the glass sheet conveyed on a carrying roller, is provided with: a cutter configured to provide the cutting line on the glass sheet; a ball slide device configured to freely move the cutter up and down in accordance with an up-down movement of the conveyed glass sheet, and to absorb an excessive pressing force of the cutter onto a glass sheet surface so as to keep the pressing force constant; a spring configured to apply an appropriate cutter pressure to the glass sheet surface; an arm configured to support the ball slide device, the spring, and the cutter; and a pressing device configured to press the arm toward the glass sheet surface.

The pressing device may be attached to a frame provided in an orthogonal direction to a conveying direction of the glass sheet so that a position of the pressing device is adjustable, and the cutting line may be provided to be in parallel to the conveying direction of the glass sheet.

Further, the pressing device may move on a frame provided in a direction obliquely traversing a conveying direction of the glass sheet in synchronization with a conveying speed of the glass sheet, and the cutting line orthogonal to the conveying direction of the glass sheet may be provided.

The glass sheet may be a strip-shaped glass ribbon formed and conveyed by a float method and may be a thin sheet having a thickness of 0.4 to 1.1 mm.

In the apparatus for providing a cutting line according to the embodiment of the invention, even if a variation in the height direction of the cutter surface for providing the cutting line is occurred by a large wave of a super-thin glass ribbon conveyed on the carrying roller on-line, of which a center product portion has a thickness of 2 mm or less and particularly a thickness of 0.4 to 1.1 mm, the cutter is smoothly moved up and down by the spring and an LM ball slide without applying an excessive pressure to the glass sheet, whereby the cutting line can be provided without damaging the super thin sheet glass.

Other aspects and advantages of the invention will be apparent from the following description, the drawings and the claims.

### Brief Description of Drawings:

Fig. 1 is a side view showing one embodiment of an apparatus for providing a cutting line on a glass sheet of the invention.
Fig. 2 is a plan view showing a relation between the apparatus for providing the cutting line and peripheral equipments thereof.
Fig. 3 is an explanatory view showing a state where a cutting line is provided on a surface of a glass sheet by a cutter.

### <Description of Reference Numerals and Signs>

- G: Glass sheet
- 2: Frame
- 3: Rail
- 4: Guide
- 5: Shaft
- 6: Tube
- 10: Pressing device
- 11: Pressing cylinder
- 12: Rod
- 13: Mounting member
- 15: Arm
- 16: Shaft
- 17: Bolt
- 18: Nut
- 19: Mounting member
- 20: Ball slide device
- 21: LM ball slide
- 21a: Rail portion
- 21b: LM block
- 22: Spring hanging member
- 23: Spring hanging hook
- 24: Spring
- 25: Spring lower end hook
- 26: Spring fixing member
- 27: Cutter holder
- 28: Cutter
- 29: Wheel chip

### Description of Embodiments:

An exemplary embodiment of the invention will be described below with reference to drawings.

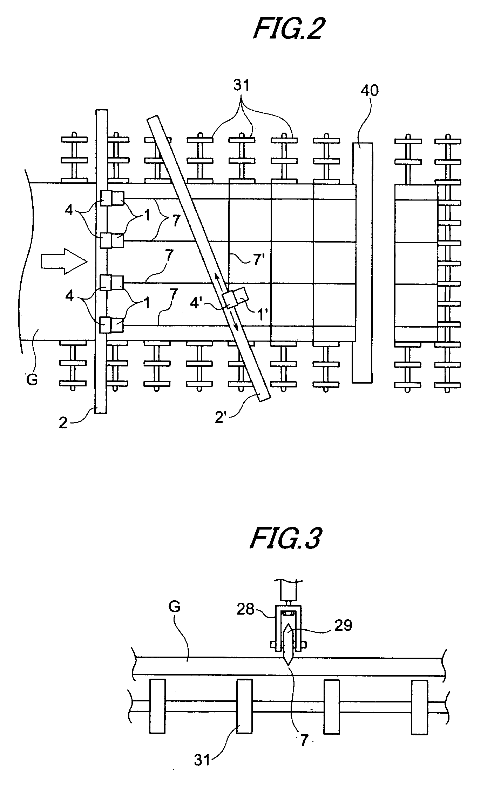

As shown in Fig. 2, in order to cut a glass sheet G conveyed in a shape of a broad ribbon with a predetermined size, groove-shaped cutting lines (refer to Fig. 3) in a conveying direction of the glass sheet (a longitudinal cutting line 7) and in a width direction thereof (a lateral cutting line 7') are in advance provided on an upper surface of the glass sheet by pressing a wheel chip 29 of a cutter onto a glass sheet surface. Next, by a bend-cutting roll 40 provided on a downstream side, the glass sheet is bent and cut off along the widthwise cutting line 7'. Thereafter, the glass sheet is bent and cut off along the lengthwise cutting line 7 in the not-shown subsequent step. In result, a glass sheet of a desired size is obtained.

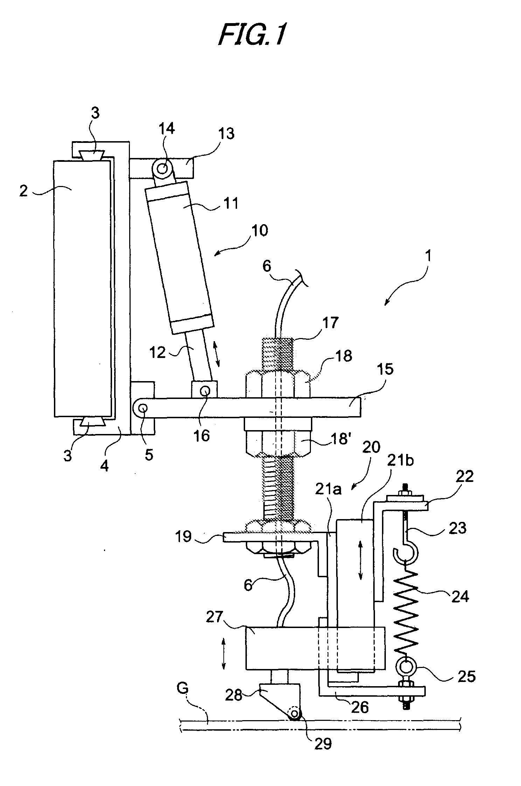

In the exemplary embodiment of the invention, a cutting line providing apparatus 1 which provides cutting lines 7, 7' on the ribbon-shaped glass sheet G conveyed on carrying rollers 31, 31... as shown in Fig. 2 includes, as shown in Fig. 1, a cutter 28 which provides the cutting line 7 on the surface of the glass sheet G; a ball slide device 20 which makes the cutter 28 for providing the cutting line 7 move freely up and down very smoothly with slight power so that the cutter 28 can respond to height variation in the up-down direction produced by the wave of the ribbon-shaped glass sheet G conveyed on the carrying rollers 31, 31, ..., and which absorbs an excessive pressing force during pressing the cutter 28 against the glass sheet surface, thereby to keep the pressing force contact; a spring 24 which applies an appropriate cutter pressure onto the glass sheet surface; and a pressing device 10 which presses an arm 15 that supports the ball slide device 20, the spring 24 and the cutter 28 toward the glass sheet surface.

As shown in Fig. 2, the cutting line providing apparatus 1 also include guides 4, each of which slides so as to freely adjust its attachment position on rails 3, 3 provided on a frame 2 provided in the direction orthogonal to a conveying direction of the ribbon-shaped glass sheet G. A desired number of the guides 4 are provided in desired positions so that the positions can be adjusted. Therefore, the lengthwise cutting lines 7, 7 are provided.

As shown in Fig. 2, in case that a cutting line providing apparatus 1' is constituted so as to be able to reciprocate on a not-shown rail of a frame 2' provided so as to traverse obliquely to the glass conveying direction, the cutting line 7' orthogonal to the conveying direction of the glass sheet is obtained. Since the cutting line providing apparatus 1' for providing the cutting line 7' runs on the rail of the frame 2' in synchronization with the conveying speed of the glass ribbon, it can provide the cutting line 7' orthogonal to the conveying direction of the glass sheet. Thus, by the cutting line providing apparatus 1 and the cutting line providing apparatus 1', the glass sheet having the longitudinal and lateral cutting lines 7' , 7 including the cutting line 7 in the conveying direction is obtained.

In the pressing device 10, as shown in Fig. 1, from an mounting member 13 secured extendingly from the vicinity of the upper end of the guide 4 provided for the frame 2 in the horizontal direction, a pressing cylinder 11 is hung. Near the substantially central portion of the arm 15 attached pivotally to the vicinity of the lower end of the guide 4, a leading end of a rod 12 of the pressing cylinder 11 is attached pivotally by a shaft 16. By extension and contraction of the pressing cylinder 11, the arm 15 moves rotationally up and down with a shaft 5 provided at one end of the arm 15 as a rotational axis.

A hollow bolt 17 which is inserted into a hole portion provided on the other end side of the arm 15 is fixed by nuts 18, 18'. To the lower end portion of the hollow bolt 17, a ball slide device 20 is attached and fixed through an L-shaped mounting member 19. The hollow bolt 17 and the L-shaped mounting member 19 are fixed to each other by a nut.

The ball slide device 20 is composed of a rail portion 21a and an LM block 21b which has a substantially C-shaped section and can slide linearly on the rail portion. Between the rail portion 21a and the LM block 21b, a not-shown ball bearing is incorporated. Therefore, the LM block 21b can slide very smoothly on the rail portion 21a by slight power.

Further, the side surface of the rail portion 21a of the LM ball slide 21 is fixed through the L-shaped mounting member 19 by a not-shown bolt. Also onto the lower end side surface of the rail portion 21a, an L-shaped spring fixing member 26 is secured by a not-shown bolt. Onto the upper portion of a horizontal portion of the spring fixing member 26, a spring lower end hook 25 is screwed up.

On the other hand, onto the side surface of the LM block 21b, an L-shaped spring hanging member 22 is secured. Onto the lower surface side of a horizontal tip portion of the spring hanging member 22, a spring hanging hook 23 is screwed up. Between the spring hanging hook 23 and the spring lower end hook 25, a spring 24 is disposed.

Furthermore, onto the side surface of the LM block 21b, a plate-shaped cutter holder 27 supporting a cutter is secured. At the leading end portion of the cutter holder 27, a cutter 28 is detachably installed. To the lower end of the cutter 28, a wheel chip 29 which provides a cutting line by contact with the glass sheet is rotatably attached.

Further, from a not-shown oil tank located on the upper side of the cutting line providing apparatus 1, a small tube 6 is disposed through the inside of the tubular bolt 17 and the cutter holder 27 up to the vicinity immediately above the wheel chip 29 of the cutter. Through the tube 6, the appropriate amount of cutter oil can be supplied to the wheel chip 29.

The glass sheet G is a strip-shaped glass ribbon formed by a float method and conveyed. A product portion of this glass ribbon is 0.4 to 1.1 mm in thickness. However, the thickness near the end portion in the width direction of the glass ribbon is about 2 mm since the glass ribbon is formed by the float method.

In case that the cutting line providing apparatus described in Fig. 1 is fixedly provided for the frame 2, it can provide the cutting line 7 in the conveying direction of the glass ribbon, that is, the longitudinal cutting line. Further, in case that the cutting line providing apparatus is disposed in the oblique direction like the frame 2' in Fig. 2 and moved in synchronization with the conveying speed of the glass sheet G, it can be used as a lateral cutting machine, so that it can provide the cutting line 7' in the lateral direction.

Next, the operation of the cutting line providing apparatus of the invention will be described.

For a continuous glass ribbon carried from a not-shown glass melting furnace through a predetermined forming step to a cutting step, of the longitudinal cutting machines 1, 1... disposed in the plural desired positions of the frame 2, only the desired longitudinal cutting machine is actuated in consideration of the width of a product potion which has the thickness-in-standard of the center portion of the glass ribbon. The unused longitudinal cutting machines 1, 1, ... are moved up by putting the pressing cylinders 11, 11, ... in a non-operating state.

When the pressing cylinder 11 of the pressing device 10 is operated, the rod 12 of the cylinder extends downward, whereby the arm 15 coupled to the shaft 16 located at the leading end of the rod 12 is pressed down. When the arm 15 moves rotationally downward with the shaft 5 as a rotation axis, the ball slide device 20 is also pressed down with the downward movement of the arm 15. Hereby, the wheel chip 29 of the cutter 28 is pressed down toward the glass surface.

In a state where the wheel chip 29 of the cutter is not pressed on the glass sheet surface, by the spring 24 provided between the spring fixing member 26 fixed to the rail portion 21a of the LM ball slide 21 and the spring hanging member 22 attached and fixed onto the side surface of the LM block 21b, the rail portion 21a and the LM block 21b keep balance and are put in a state of balance.

In case that such the pressing power that the wheel chip 29 of the cutter 28 is pressed to a position lower than the glass sheet surface is applied by the pressing device 10, the wheel chip 29 stops at the glass sheet surface. In this time, the LM block 21b moves up by the excessive pressing power, and the excessive pressing power is absorbed by the LM ball slide 21 and the spring 24. Thus, the spring 24 applies the appropriate cutter pressure.

Further, also in case that the glass sheet is conveyed in a state where the glass sheet surface rises by wave, the wheel chip 29 of the cutter 28 rises by the rising height of the glass sheet surface. With rising of the wheel chip 29, the LM block 21b moves up. The excessive pressing power is absorbed by the LM ball slide 21 and the spring 24 so as to prevent the wheel chip 29 of the cutter 28 from pressing the glass sheet surface excessively.

Generally, even in case that there are rising of the glass sheet surface due to the wave and the excessive pressing power on the glass sheet surface due to the excessive pressing power by the cylinder, as long as the thickness of the glass sheet is 2 mm or more, the glass sheet is not broken even in case that the ball chip 29 is raised by the glass sheet.

However, in case of a super-thin glass sheet having the thickness of 0.4 to 1.1 mm, when the glass sheet G is going to raise the wheel chip 29 due to the wave, the cutter cannot frequently rise smoothly under the structure in which the excessive pressing power is absorbed by only the spring. In this case, before the cutter rises completely, the pressure between the cutter and the glass sheet surface increases, so that the glass sheet breaks.

Therefore, in the exemplary embodiment of the invention, using the LM ball slide 21 which is very small in sliding resistance due to a not-shown ball bearing together with the elastic spring 24 enables the cutter 28 to rise smoothly in a moment, whereby the excessive pressure is not applied to the glass sheet surface for even a moment.

In case of a sheet thickness of 2 to 5 mm which is thickness of usual structural glass or of vehicle glass, the pressure of the cutter onto the glass sheet surface is, for example, 1. 0 to 4.0 kg/cm². On the other hand, in case of a sheet thickness of 1.1 mm, the pressure is 0.5 to 1.0 kg/cm² which is 1/2 or less of the usual pressure; and in case of the thickness of 0.7 mm, the pressure is 0.3 to 0.8 kg/cm² which is 1/2 or less of the usual pressure.

While the invention has been described in detail and with reference to the specific embodiment thereof, it would be apparent to those skilled in the art that various changes and modification may be made therein without departing from the scope of the invention.

The present invention is based on Japanese Patent application No. 2007-282879, filed on October 31, 2007, the entire contents of which are hereby incorporated by reference.

### Industrial Applicability:

The invention can be used in an apparatus for providing a cutting line on a glass sheet which provides a uniform cutting line without damaging the glass sheet.

## Claims

1. An apparatus for providing a cutting line on a glass sheet, in which the cutting line for bend-cutting the glass sheet is provided on the glass sheet conveyed on a carrying roller, the apparatus comprising:
a cutter configured to provide the cutting line on the glass sheet;
a ball slide device configured to freely move the cutter up and down in accordance with an up-down movement of the conveyed glass sheet, and to absorb an excessive pressing force of the cutter onto a glass sheet surface so as to keep the pressing force constant;
a spring configured to apply an appropriate cutter pressure to the glass sheet surface;
an arm configured to support the ball slide device, the spring, and the cutter; and
a pressing device configured to press the arm toward the glass sheet surface.

2. The apparatus for providing a cutting line on a glass sheet according to Claim 1, wherein the pressing device is attached to a frame provided in an orthogonal direction to a conveying direction of the glass sheet so that a position of the pressing device is adjustable, and the cutting line is provided to be in parallel to the conveying direction of the glass sheet.

3. The apparatus for providing a cutting line on a glass sheet according to Claim 1, wherein the pressing device is moved on a frame provided in a direction obliquely traversing a conveying direction of the glass sheet in synchronization with a conveying speed of the glass sheet, and the cutting line orthogonal to the conveying direction of the glass sheet is provided.

4. The apparatus for providing a cutting line on a glass sheet according to any of Claims 1 to 3, wherein the glass sheet is a strip-shaped glass ribbon formed and conveyed by a float method and is a thin sheet having a thickness of 0.4 to 1.1 mm.
